(19) Europäisches Patentamt
European Patent Office
Office européen des brevets

(11) Numéro de publication : **0 332 543 B1**

# (12) FASCICULE DE BREVET EUROPEEN

(45) Date de publication du fascicule du brevet : **01.07.92 Bulletin 92/27**

(51) Int. Cl.$^5$ : **C08G 73/14,** C08L 79/08, D01F 6/74

(21) Numéro de dépôt : **89420047.6**

(22) Date de dépôt : **14.02.89**

## (54) Solutions de polyamides-imides et leur procédé d'obtention.

(30) Priorité : **22.02.88 FR 8802328**

(43) Date de publication de la demande : **13.09.89 Bulletin 89/37**

(45) Mention de la délivrance du brevet : **01.07.92 Bulletin 92/27**

(84) Etats contractants désignés : **AT BE CH DE ES FR GB IT LI LU NL SE**

(56) Documents cités : **FR-A- 2 079 785**

(73) Titulaire : **RHONE-POULENC FIBRES**
**129, rue Servient**
**F-69003 Lyon (FR)**

(72) Inventeur : **Balme, Maurice**
**23 boulevard du 11 Novembre**
**F-69110 Sainte Foy les Lyon (FR)**
Inventeur : **Barthelemy, Pascal**
**21 rue de la Part Dieu**
**F-69003 Lyon (FR)**

(74) Mandataire : **Braconnier, Daniel et al**
**RHONE-POULENC FIBRES Direction Technique Brevets Boîte Postal 82-41**
**F-69355 Lyon Cédex 2 (FR)**

**EP 0 332 543 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des solutions de polyamides-imides directement filables et conformables dans un mélange solvant.

Elle concerne également un procédé pour l'obtention de solutions présentant une coloration améliorée.

Il est déjà connu selon le FR 2079785 de préparer des solutions à base de polyamides-imides dans la N-méthylpyrrolidone, mais les solutions et les polymères ainsi obtenus présentent une coloration intense brune limitant les possibilités de coloration ultérieure des articles mis en forme à partir de ces solutions.

La présente invention a donc pour objet l'obtention des solutions de polyamides-imides de coloration bien moindre que celle observée avec la N-méthylpyrrolidone comme solvant unique.

Plus particulièrement elle concerne des solutions limpides de polyamides-imides (PAI) directement filables et conformables contenant :

a) 5 à 30 % en poids d'un PAI comportant

. des motifs de récurrence amide-imide (A) de formule :

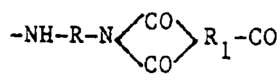

. éventuellement des motifs de récurrence amide (B) de formule :

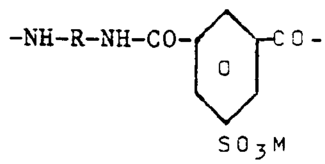

. éventuellement des motifs amide (C) de formule :

$$-NR-R-NH-CO-R_2-CO-$$

dans lesquels :

R = groupe organique divalent exempt de groupe éther.

$R_1$ = radical aromatique trivalent.

$R_2$ = radical aromatique divalent

M = métal alcalin ou alcalino terreux, dans

b) un mélange solvant comprenant :

. 40 à 80 % en poids de γ butyrolfactone (γ BL) anhydre et exempte d'alcool butylique.

. 20 à 60 % en poids d'un solvant amide anhydre aprotique de point d'ébullition élevé. Elles possèdent de plus une coloration quantifiée par mesure de l'absorbance à une longueur d'onde λ 500 nm, d'une solution à 21 % de polymère diluée 10 fois sur un spectrophotomètre Shimadzu comprise entre 0,05 et 0.20, de préférence entre 0,08 et 0,17.

La présente invention concerne également un procédé pour l'obtention de solutions limpides directement filables et conformables à base de polyamides-imides, comprenant la réaction conduisant au polyamide-imide effectuée dans la γ butyrolactone anhydre et exempte d'alcool butylique comme solvant de polycondensation, la concentration en polymère avant dilution étant alors comprise entre 12 et 39 %, et la dilution ensuite effectuée à une température comprise entre 120 et 165°C dans un solvant amide aprotique anhydre de haut point d'ébullition, la concentration finale dans le mélange solvant étant comprise entre 5 et 30 % en poids.

Les solutions selon la présente invention sont préparées par réaction dans de la γ butyrolactone exempte d'alcool butylique, entre :

– au moins un diisocyanate de formule OCN-R-NCO dans laquelle R est un groupe organique divalent exempt de groupe éther.

– un anhydride acide aromatique

– éventuellement un dicarboxy benzène 3,5 sulfonate alcalin ou alcalino terreux, en proportions telles que le rapport molaire, diisocyanate / ensemble des réactifs acides, soit sensiblement égal à 1.

– éventuellement un diacide aromatique.

Parmi les diisocyanates utilisables ont peut citer les diisocyanates aromatiques, les toluyènes diisocyanates, de préférence symétriques tel que le diphénylméthane -4,4'diisocyanate ou d'autres diisocyanates tels

que le bis-cyclohéxyl diisocyanate.

IL est aussi possible d'utiliser plusieurs des diisocyanates cités ci-dessus. Mais on utilise préférentiellement le diphénylméthane 4,4′ diisocyanate.

Par contre l'utilisation de diphényléther 4,4′ diisocyanate est exclu de l'invention car le polyamide-imide correspondant précipite sans montée préalable de la viscosité de sorte que les les solutions obtenues ne sont ni stockables, ni utilisables.

Comme anhydride acide aromatique on utilise de préférence l'anhydride trimellique.

Comme dicarboxy 3,5 benzène sulfonate de métal alcalin ou alcalino terreux on utilise de préférence le sulfonate de sodium ou de potassium.

Parmi les diacides aromatiques, les acides téréphtalique et isophtalique sont généralement utilisés quoique l'acide téréphtalique soit préféré.

Les différents composés acides ou anhydrides acides sont présents dans les proportions molaires suivantes :

- anhydride acide aromatique de 80 à 100 % par rapport à l'ensemble des réactifs acides, de préférence 85 à 95 %.
- diacide aromatique de 0 à 20 %, de préférence de 5 à 15 %.
- dicarboxy benzène sulfonate en proportion de 0 à 5 %, de préférence 1 à 3 % par rapport à l'ensemble des réactifs acides.

La réaction a lieu à température élevée, généralement comprise entre 170 et 200°C dans la $\gamma$ butyrolactone pure (dont l'alcool butylique a été retiré par distillation) et anhydre.

A la fin de la réaction de polycondensation la concentration du polymère est comprise entre 12 et 39 % de préférence entre 15 à 36 % et l'on effectue une dilution avec un solvant amide aprotique anhydre de sorte que la concentration finale en polyamide-imide soit comprise entre 5 et 30 %, de préférence 6 et 27 %.

On entend par solvant amide aprotique de haut point d'ébullition un amide non donneur de protons possédant une répartition électronique conduisant à une polarité et ayant un point d'ébullition supérieur ou égal à 150°C.

La dilution est effectuée à une température comprise entre 120 et 165°C, de préférence entre 140 et 160°C.

En dessous de 125°C la solution reprécipite avant dilution par un solvant amide.

Parmi les solvants de dilution on peut citer la N-méthyl -2 pyrrolidone, le diméthylacétamide, le diméthylformamide, la tétraméthylurée.

La $\gamma$ butyrolactone est présente dans la solution finale entre 40 et 80 % en poids, de préférence 50 à 80 % et le solvant de dilution à raison de 20 à 60 %, de préférence 20 à 50 %. Si ces proportions ne sont pas respectées des précipitations de polyamide-imide se produisent. La $\gamma$ butyrolactone sert uniquement comme solvant de polycondensation alors que les solvants amides sont uniquement utilisés pour la dilution et donc l'obtention des solutions pour que celles-ci présentent une coloration améliorée.

Si l'on inverse l'ordre d'introduction des solvants soit la polycondensation n'a pas lieu, soit des précipitations se produisent, soit encore la viscosité est insuffisante.

Les solutions ainsi obtenues sont limpides et présentent une coloration quantifiée par la mesure de l'absorbance à une longueur d'onde $\lambda$ de 500 nm d'une solution à 21 % de polymère dilué 10 fois sur un spectrophotomètre Shimadzu, comprise entre 0,05 et 0,2, de préférence entre 0,08 et 0,17.

La viscosité des solutions obtenues selon l'invention peut varier largement. Elle est mesurée sur une solution à 21 % de polymère sur un appareil de type EPPRECHT RHEOMAT 15 - Cuve D+E.

Avec certains co-solvants, comme le diméthylformamide ou le diméthylacétamide à taux d'extrait sec constant et pour des rapports solvant de polycondensation / solvant de dilution identiques, il est possible d'adjuster la viscosité des solutions dans un large gamme. A masse moléculaire identique on observe une diminution de la viscosité des solutions de filage, ce qui permettra de travailler avec des taux d'extrait sec plus élevés, favorisant ainsi la structuration des fils obtenus par filage.

En outre, la $\gamma$ butyrolactone comme solvant de réaction présente un point d'ébullition élevé, ce qui permet de réaliser la polycondensation à des températures élevées pendant un temps court et d'obtenir des solutions stables et homogènes à température ambiante et dans le temps, c'est à dire qu'elles ne présentent ni précipitation ni évolution sensible de la viscosité.

Les solutions selon l'invention peuvent être obtenues en discontinu ou en continu au moyen de tout appareil approprié.

Les solutions selon l'invention sont conformables, en particulier filables par les procédés de filage humide ou à sec.

Dans les essais qui suivent les valeurs de $\overline{Mn}$ et $\overline{Mw}$ sont déterminés par chromatographie d'exclusion sur gel (GPC) dans la N-méthylpyrrolidone à 80°C et 0,1 mole/litre de bromure de lithium, les masses étant exprimées par rapport à un étalonnage polystyrène.

L'indice de polydispersité I correspond au rapport $\frac{\overline{Mw}}{\overline{Mn}}$

Les exemples ci-après illustrent la présente invention sans la limiter.

EXEMPLE 1 -

-Réactifs :

. solvant de réaction :

γ butyrolactone (γ BL)

distillée......................... 490 g (d=1,13) 434 ml

. anhydride trimellique (ANTM) ...... 76,8 g(0,4 mole)

. acide téréphtalique (AT) .......... 13,28 g (0,08 mole)

. dicarboxy-3,5 benzène

sulfonate de sodium (AISNa) ....... 5,36 g (0,02 mole)

. diphénylméthane 4,4'

diisocyanate (MDI) ................ 125 g (0,5 mole)

. solvant de dilution

diméthylacétamide (DMAC)........... 192 g (d=0,94) 204 ml

Dans un réacteur agité, muni d'un réfrigérant à reflux, d'une arrivée d'azote, d'un bain d'huile thermostaté et d'une ampoule de coulée pour l'addition des solvants de dilution on introduit les monomères cités ci-dessus et le solvant de réaction dans les proportions indiquées. La température est élevée progressivement de la température ambiante à 198°C en 2 heures environ et on laisse revenir la masse réactionnelle à 170°C. La concentration est alors de 27 %.

Le solvant de dilution est coulé dans le réacteur pendant 8 minutes et la masse réactionnelle est refroidie progressivement pour être stockée. La concentration est alors de 21 %.

A température ambiante le polymère est soluble dans le mélange solvant.

Masses moléculaires du polymère $\overline{Mn}$ = 38700 - $\overline{Mw}$ 112000 - I = 2,9

EXEMPLE 2 -

-Réactifs :

. solvant de réaction :

γ butyrolactone distillée......... 294 g (d=1,13)-260 ml

. ANTM ............................ 46,08 g (0,24 mole)

. AT .............................. 7,97 g (0,048 mole)

. AISNa ........................... 3,22 g (0,012 mole)

. MDI ............................. 75 g (0,3 mole)

. solvant de dilution

diméthylformamide ............. 115,2 g(d=0,94)-123 ml

On opère de la même manière qu'à l'exemple 1 mais en utilisant le diméthylformamide comme solvant de dilution, coulé en 6 mn. A température ambiante le polymère est soluble dans le mélange solvant.

Masses moléculaires du polymère $\overline{Mn}$ = 224440 - $\overline{Mw}$ = 53450 - I = 2,38

Les caractéristiques de la solution sont indiquées dans le tableau 1 ci-dessous.

EXEMPLE 3 -

Réactifs :

. solvant de réaction

γ butyrolactone distillée ........ 294 g(d=1,13)-260 ml

. ANTM .............................. 46,08 g (0,24 mole)

. AT ................................ 7,97 g (0,048 mole)

. AISNa ............................. 3,22 g (0,012 mole)

. MDI ............................... 75 g (0,3 mole)

. solvant de dilution

tétraméthylurée distillée (TMU)... 115,2 g(d=0,97)-119 ml

On opère de la manière indiquée à l'exemple 1 mais en utilisant la tétraméthylurée distillée comme solvant de dilution, qui est introduite en 10 mn. La solution obtenue est limpide à température ambiante. Les caractéristiques de la solution sont consignées dans le tableau 1 ci-dessous.
Masses moléculaires du polymère $\overline{Mn}$ = 23160 - $\overline{Mw}$ = 52820 - I = 2,28

EXEMPLE 4 -

-Réactifs :

. solvant de réaction

γ butyrolactone distillée ......... 588 g(d=1,13)-520 ml

. ANTM .............................. 92,16 g (0,48 mole)

. AT ................................ 15,94 g (0,096 mole)

. AISNa ............................. 6,43 g (0,024 mole)

. MDI ............................... 150 g (0,6 mole)

. solvant de dilution

N-méthylpyrrolidone (NMP) ....... 230,4g(d=1,03)-224 ml

On opère de la manière indiquée à l'exemple 1 mais en utilisant comme solvant de dilution la N-méthylpyrrolidone qui est coulée en 10 mn.
Masses moléculaires du polymère $\overline{Mn}$ = 25260 - $\overline{Mw}$ = 62200 - I = 2,46

Les caractéristiques de la solution sont consignées dans le tableau 1 ci-dessous.

EXEMPLE 5 - (témoin)

On prépare une solution de polyamide-imide à partir des mêmes monomères, en quantités identiques à celles décrites dans l'exemple 1 mais en utilisant comme solvant unique la N-méthylpyrrolidone, selon le procédé décrit dans le FR 2079785.
Masses moléculaires du polymère : $\overline{Mn}$ = 28700 - $\overline{Mw}$ = 81700 - I = 2,8

EXEMPLE 6 -

-Réactifs :

. solvant de réaction

γ butyrolactone (γ BL)

distillée ...................... 490 g(d=1,13)-434 ml

. ANTM ........................... 76,8 g (0,4 mole)

. AT ............................. 13,28g (0,08 mole)

. AISNa .......................... 5,36g (0,02 mole)

. diphényléther 4,4'

diisocyanate (DIDE) ........... 126 g (0,5 mole)

. solvant de dilution

diméthylacétamide (DMAC) ....... 192 g(d=0,94)-204 ml

On utilise un réacteur identique à celui utilisé dans l'exemple 1.

La température est élevée de la température ambiante à 198°C en 2 heures environ et est maintenue sous agitation pendant plus d'une heure.

On observe un début de précipitation après 135 mn de réaction sans montée en viscosité préalable.

Après 155 mn de réaction la masse réactionnelle est très épaisse. L'addition de la N-méthylpyrrolidone de dilution ne redissout pas le précipite de sorte qu'aucune solution filable ou conformable ne peut être obtenue, même après maintien du chauffage pendant 30 mn à 198°C.

L'utilisation de diphényléther 4,4' diisocyanate ne conduit pas à des solutions utilisables et est exclue de l'invention.

TABLEAU 1

| Ex. | solvant réaction/dilution | rapport pondéral - % | coloration (λ) | viscosité η (25°- 21%) |
|---|---|---|---|---|
| 1 | γ BL/DMAC | 72 / 28 | 0,170 | 620 |
| 2 | γ BL/DMF | " | 0,095 | 560 |
| 3 | γ BL/TMU | " | 0.086 | 850 |
| 4 | γ BL/NMP | " | 0,143 | 764 |
| 5 | NMP/NMP | " | 0,505 | 800 |
| 6 | γ BL/NMP | " | - | - |

EXEMPLE 7 -

-Réactifs :

. solvant de réaction
  γ butyrolactone .................. 11,435 g
. anhydride trimellique (ANTM) ...... 2,58 g(0,01344 mole)
. acide téréphtalique (AT) .......... 0,445g(0,00268 mole)
. dicarboxy-3,5 benzène
  sulfonate de sodium (AISNa) ....... 0,1795g(0,00067 mole)
. diphénylméthane 4,4'
  diisocyanate (MDI) ............. 4,2 g (0,0168 mole)
. solvant de dilution
  N-méthylpyrrolidone ............ 11,435 g

Dans un ballon muni d'un réfrigérant et d'un agitateur on charge sous azote les réactifs monomères et le solvant de réaction. La masse réactionnelle est agitée et plongée dans un bain d'huile thermostaté à 198°C. Elle met 10 mn pour atteintre les 198°C. On laisse la masse réactionnelle sous agitation pendant 2 H 15. On laisse la masse réactionnelle refroidir à 140°C et on ajoute alors le solvant de dilution. La solution est limpide à température ambiante.
Masses moléculaires du polymère $\overline{Mn}$ = 34210 - $\overline{Mw}$ = 1000260 - I = 2,93 Les caractéristiques de la solution sont données dans le tableau 2 ci-dessous.

EXEMPLE 8 -

On opère de la même manière qu'à l'exemple 7 avec les mêmes réactifs mais un rapport de 60/40 entre le solvant de réaction et le solvant de dilution, c'est-à-dire avec 13,72 g de γBL et 9,15 g de NMP.

La solution obtenue est limpide et stable à température ambiante ; les caractéristiques sont consignées dans le tableau 2.
Masses moléculaires du polymère $\overline{Mn}$ = 32130 - $\overline{Mw}$ = 90290 - I = 2,81

EXEMPLE 9 -

On opère de la manière indiquée à l'exemple 7 avec les mêmes réactifs mais un rapport solvant de réaction/solvant de dilution 72/28, c'est-à-dire en utilisant 16,46 g de γBL et 6,45 g de NMP.

La solution est limpide et stable à température ambiante, ses caractéristiques sont consignées dans le tableau 2.
Masses moléculaires du polymère $\overline{Mn}$ = 25300 - $\overline{Mw}$ = 73370 - I = 2,90

EXEMPLE 10 -

On opère de la manière indiquée à l'exemple 7 mais avec un rapport solvant de réaction/solvant de dilution 80/20 soit 18,296 g de γBL et 4,574 g de NMP.

On obtient une solution limpide et stable à température ambiante dont les caractéristiques sont données dans le tableau 2.
Masses moléculaires du polymère $\overline{Mn}$ = 41000 - $\overline{Mw}$ = 148860 - I = 3,63

EXEMPLE 11 - (comparatif)

On opère de la manière indiquée à l'exemple 7 mais avec un rapport solvant de réaction/solvant de dilution 90/10 soit 20,583 g de γBL distillée et 2,287 g de NMP.

La solution obtenue reprécipite à température ambiante de sorte qu'une telle solution n'est pas utilisable pour le filage, elle est donc exclue de l'invention.

EXEMPLE 12 -

On opère de la manière indiquée à l'exemple 7 mais avec le diméthylacétamide (DMAC) comme solvant de dilution et un rapport solvant de réaction/solvant de dilution 50/50, à raison de 11,435 g de γBL et 11,435 g de DMAC. Le DMAC est ajouté alors que la température de la masse réactionnelle est à 160°C.

La solution obtenue est stable à température ambiante, ses caractéristiques sont données dans le tableau 2.

Masses moléculaires du polymère $\overline{Mn}$ = 33360 - $\overline{Mw}$ = 97750 - I = 2,93

EXEMPLE 13 -

On opère de la manière indiquée à l'exemple 12 mais avec un rapport γBL/DMAC de 60/40, à raison de 13,72 g de γBL et 9,15 g de DMAC.

La solution obtenue est stable à température ambiante, ses caractéristiques sont données dans le tableau 2.

Masses moléculaires du polymère $\overline{Mn}$ = 37500 - $\overline{Mw}$ = 107230 - I = 2,86

EXEMPLE 14 -

On opère de la manière indiquée à l'exemple 12 mais avec un rapport γBL/DMAC de 80/20 soit 18,296 g de γBL et 4,574 g de DMAC.

La solution obtenue est stable à température ambiante, ses caractéristiques sont données dans le tableau 2.

Masses moléculaires du polymère $\overline{Mn}$ = 43030 - $\overline{Mw}$ = 161050 - I = 3,74

EXEMPLE 15 - (comparatif)

On reprend l'exemple 12 mais avec un rapport γBL/DMAC de 90/10 soit 20,583 g de γBL et 2,287 g de DMAC.

On obtient une précipitation à température ambiante avec un tel rapport.

EXEMPLE 16 -

On reprend l'exemple 7 avec comme solvant de dilution la tétraméthylurée (TMU) avec un rapport γBL/TMU de 72/28, soit 16,46 g de γBL et 6,45 g de TMU.

La solution obtenue est limpide et stable à température ambiante, ses caractéristiques sont données dans le tableau 2.

Masses moléculaires du polymère $\overline{Mn}$ = 23160 - $\overline{Mw}$ = 61200 - I = 2,64

EXEMPLE 17 -

On opère de la manière indiquée à l'exemple 7 avec comme solvant de dilution le diméthylformamide (DMF) et un rapport γBL/DMF de 72/28 soit 16,46 g de γBL et 6,45 g de DMF.

La solution obtenue est limpide et stable à température ambiante, ses caractéristiques sont données dans le tableau 2.

EXEMPLE 18 - (comparatif)

On opère de la manière indiquée à l'exemple 7 mais avec comme solvant de dilution la γbutyrolactone avec un rapport solvant de réaction/solvant de dilution 72/28.

La solution obtenue est inutilisable, elle reprécipite à température ambiante.

TABLEAU 2

| Exemples | solvant poly-condensation (S1) | solvant dilution (S2) | rapport pondéral S1 / S2 | coloration | viscosité 25° (Poises) à (c)=21 % P/P | Observations |
|---|---|---|---|---|---|---|
| 7 | γ BL | NMP | 50/50 | 0,130 | 340 | Limpide à 20°C |
| 8 | γ BL | NMP | 60/40 | 0,137 | 315 | " |
| 9 | γ BL | NMP | 72/28 | 0,143 | 636 | " |
| 10 | γ BL | NMP | 80/20 | 0,140 | 2834 | " |
| 11 | γ BL | NMP | 90/10 | - | - | exemple comparatif - reprécipitation à 20°C |
| 12 | γ BL | DMAC | 50/50 | 0,153 | 74 | Limpide à 20°C |
| 13 | γ BL | DMAC | 60/40 | 0,162 | 346 | " |
| 14 | γ BL | DMAC | 80/20 | 0,165 | 2141 | " |
| 15 | γ BL | DMAC | 90/10 | - | - | exemple comparatif - reprécipitation à 20°C |
| 16 | γ BL | TMU | 72/28 | 0,086 | 853 | Limpide à 20°C |
| 17 | γ BL | DMF | 72/28 | 0,095 | 507 | " |
| 18 | γ BL | γ BL | 72/28 | - | - | exemple comparatif - reprécipitation à 20°C |

## Revendications

**Revendications pour les Etats contractants suivants: AT, BE, CH, DE, FR, GB, IT, LI, LU, NL, SE**

1. Solutions limpides directement filables et conformables caractérisées par le fait qu'elles contiennent :

a) 5 à 30 % en poids d'un polyamide-imide comportant

. des unités de récurrence amide-imide (A) de formule :

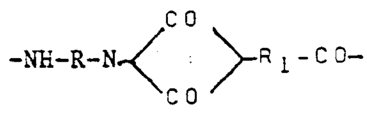

. des unités de récurrence amide (B) de formule :

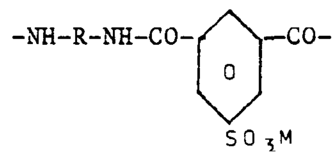

. des unités de récurrence amide (C) de formule :

$$-NH-R-NH-CO-R_2-CO-$$

dans lesquelles :

R = radical organique divalent exempt de groupe éther
$R_1$ = radical aromatique trivalent
$R_2$ = radical aromatique divalent
M = métal alcalin ou alcalino terreux,

les unités A représentant 80 à 100 % de l'ensemble des unités
les unités B " 0 à 5 % " " "
les unités C " 0 à 20 % " " "

b) dans un mélange solvant comprenant :

. 40-80 % en poids de γbutyrolactone anhydre exempte d'alcool butylique
. 20-60 % d'un solvant amide aprotique anhydre de point d'ébullition élevé

2. Solutions selon la revendication 1 caractérisées par le fait qu'elles possèdent une coloration quantifiée par la mesure de l'absorbance à même longueur d'onde de 500 nm d'une solution à 21% de polymère dilué 10 fois au moyen d'un spectrophotomètre Shimadzu, comprise entre 0,05 et 0,2.

3. Solutions selon la revendication 1° caractérisées par le fait que le mélange solvant comprend 50 à 80 % de γbutyrolactone et 20 à 50 % d'un solvant amide aprotique de point d'ébullition élevé.

4. Solutions filables selon la revendication 1° caractérisées par le fait que la concentration en polyamide-imide dans le mélange est comprise entre 6 et 27 %.

5. Solutions filables selon la revendication 1° caractérisées par le fait que le solvant amide est la N-méthylpyrrolidone, le diméthylacétamide, le diméthylformamide ou la tétraméthylurée.

6. Solutions filables selon la revendication 1° caractérisées par le fait que dans les unités A,B,C, R est un radical aromatique ou aliphatique.

7. Solutions filables selon les revendications 1° et 6° caractérisées par le fait que R est un radical de formule

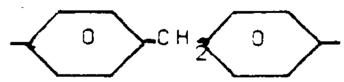

8. Solutions filables selon la revendication 1° caractérisées par le fait que les unités amides-imides A contiennent un radical $R_1$ de formule

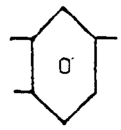

9. Solutions filables selon la revendication 1° caractérisées par le fait que les unités amides B contiennent un radical $R_2$ de formule

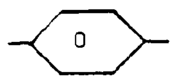

10. Solutions filables selon la revendication 1° caractérisées par le fait que les unités amides B contiennent un groupe $SO_3M$ dans lequel M est un métal alcalin.

11. Procédé pour l'obtention de solutions directement filables et conformables à base de polyamides-imides selon la revendication 1 caractérisé par le fait que :

– la polycondensation est effectuée entre au moins

a. un diisocyanate de formule -OCN-R-NCO-dans laquelle R est un groupe organique divalent exempt de groupe éther.

b. un anhydride acide aromatique

c. un dicarboxy-3,5 benzène sulfonate alcalin ou alcalino terreux

d. un diacide aromatique en proportions telles que le rapport molaire $\frac{a}{b+c+d}$ soit sensiblement égal à 1 et que l'anhydride acide soit présent à raison de 80 à 100 moles %, le benzène sulfonate à raison de 0 à 5 %, l'acide aromatique à raison de 0 à 20 moles % par rapport à l'ensemble des réactifs acides, dans la $\gamma$ butyrolactone anhydre exempte d'alcool butylique comme solvant de polycondensation, la concentration en polymère avant dilution étant comprise entre 12 et 39 %, puis

la dilution est ensuite effectuée à une température comprise entre 120 et 165°C dans un solvant amide aprotique de haut point d'ébullition de sorte que la concentration finale en polyamide-imide dans le mélange solvant soit comprise entre 5 et 30 % et que le rapport pondéral solvant de réaction/solvant de dilution soit compris entre 40/60 et 80/20.

12. Procédé selon la revendication 11° caractérisé par le fait que le rapport pondéral solvant de réaction/solvant de dilution est compris entre 50/50 et 80/20.

13. Procédé selon la revendication 11° caractérisé par le fait qu'avant dilution la concentration en polymère est comprise entre 15 et 36 %.

14. Procédé selon la revendication 11° caractérisé par le fait qu'après dilution la concentration du polymère est comprise entre 6 et 27 %.

15. Procédé selon la revendication 11° caractérisé par le fait que la dilution est effectuée à une température comprise entre 140 et 160°C.

16. Procédé selon la revendication 11° caractérisé par le fait que diisocyanate utilisé est un diisocyanate aromatique ou aliphatique.

17. Procédé selon la revendication 11° et 16°, caractérisé par le fait que le diisocyanate utilisé est le diphénylméthane 4,4′-diisocyanate.

18. Procédé selon la revendication 11° caractérisé par le fait que l'anhydride acide aromatique est l'anhydride trimellique.

19. Procédé selon la revendication 11° caractérisé par le fait que l'acide aromatique est l'acide téréphtalique.

20. Procédé selon la revendication 11° caractérisé par le fait que le benzène sulfonate est le sel de sodium ou potassium.

**Revendications pour l'Etat contractant suivant: ES**

1. Procédé pour l'obtention de solutions directement filables et conformables à base de polyamides-imides contenant :

a) - 5 à 30 % en poids d'un polyamide-imide comportant :

. des unités de récurrence amide-imide (A) de formule :

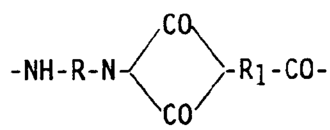

. des unités de récurrence amide (B) de formule

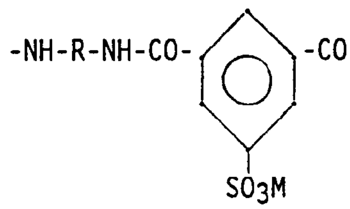

. des unités de récurrence amide (C) de formule :

$$-NH-R-NH-CO-R_2-CO-$$

dans lesquelles :

R = radical organique divalent exempt de groupe éther,
$R_1$ = radical aromatique trivalent,
$R_2$ = radical aromatique divalent,
M = métal alcalin ou alcalino terreux,

les unités A représentant 80 à 100 % de l'ensemble des unités,
les unités B représentant 0 à 5 % de l'ensemble des unités,
les unités C représentant 0 à 20 % de l'ensemble des unités.

b) - dans un mélange solvant comprenant :

. 40-80 % en poids de γ-butyrolactone anhydre, exempte d'alcool butylique,
. 20-60 % d'un solvant amide aprotique anhydre de point d'ébullition élevé,

– par polycondensation effectuée entre au moins :

a) - un diisocyanate de formule -OCN-R-NCO- dans laquelle R est un groupe organique divalent exempt de groupe éther,
b) - un anhydride acide aromatique,
c) - un dicarboxy-3,5 benzène sulfonate alcalin ou alcalino terreux,
d) - un diacide aromatique a en proprotions telles que le rapport molaire $\frac{a}{b+c+d}$ soit sensiblement égal à 1 et que l'anhydride acide soit présent à raison de 80 à 100 moles %, le benzène sulfonate à raison de 0 à 5 %, l'acide aromatique à raison de 0 à 20 moles % par rapport à l'ensemble des réactifs acides, dans la γ-butyrolactone anhydre exempte d'alcool butylique comme solvant de polycondensation, la concentration en polymère avant dilution étant comprise entre 12 et 39 %, puis

– dilution ensuite effectuée à une température comprise entre 120 et 165 °C dans un solvant amide aprotique de haut point d'ébullition de sorte que la concentration finale en polyamide-imide dans le mélange solvant soit comprise entre 5 et 30 % et que le rapport pondéral solvant de réaction/solvant de dilution soit compris entre 40/60 et 80/20.

2. Procédé selon la revendication 1, caractérisé par le fait que le rapport pondéral solvant de réaction/solvant de dilution est compris entre 50/50 et 80/20.

3. Procédé selon la revendication 1, caractérisé par le fait qu'avant dilution la concentration en polymère est comprise entre 15 et 36 %.

4. Procédé selon la revendication 1, caractérisé par le fait que le solvant amide est la N-méthylpyrrolidone, le diméthylacétamide, le diméthylformamide ou la tétraméthylurée.

5. Procédé selon la revendication 1, caractérisé par le fait que dans les unités A, B, C, R est un radical aromatique ou aliphatique.

6. Procédé selon les revendications 1 et 6, caractérisé par le fait que R est un radical de formule :

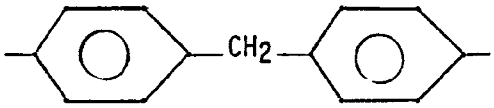

7. Procédé selon la revendication 1, caractérisé par le fait que les unités amides-imides A contiennent un radical $R_1$ de formule :

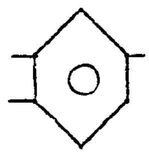

8. Procédé selon la revendication 1, caractérisé par le fait que les unités amides B contiennent un radical $R_2$ de formule

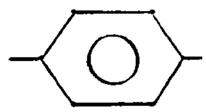

9. Procédé selon la revendication 1, caractérisé par le fait que les unités amides B contiennent un groupe $SO_3M$ dans lequel M est un métal alcalin.

## Claims

### Claims for the following Contracting States: AT, BE, CH, DE, FR, GB, IT, LI, LU, NL, SE

1. Clear solutions which can be spun and shaped directly, characterised in that they contain:

a) 5 to 30 % by weight of a polyamide-imide comprising

. amide-imide repeat units (A) of formula:

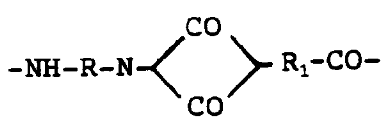

. amide repeat units (B) of formula:

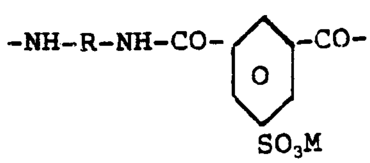

. amide repeat units (C) of formula:

$$-NH-R-NH-CO-R_2-CO-$$

in which

R = divalent organic radical free from any ether group

$R_1$ = trivalent aromatic radical

$R_2$ = divalent aromatic radical
M = alkali or alkaline-earth metal,

| | | | | | |
|---|---|---|---|---|---|
| the units A | representing | 80 to 100 % | of | all | the units |
| the units B | " | 0 to 5 % | " | " | " |
| the units C | " | 0 to 20 % | " | " | " |

b) in a solvent mixture comprising:
. 40-80 % by weight of anhydrous γ-butyrolactone free from butyl alcohol
. 20-60 % of an anhydrous aprotic amide solvent of high boiling point.

2. Solutions according to Claim 1, characterised in that they have a colour quantified by the measurement of the absorbance at the same wavelength of 500 nm of a 21 % strength solution of polymer diluted 10-fold by means of a Shimadzu spectrophotometer, of between 0.05 and 0.2.

3. Solutions according to Claim 1, characterised in that the solvent mixture comprises 50 to 80 % of γ-butyrolactone and 20 to 50 % of an aprotic amide solvent of high boiling point.

4. Spinnable solutions according to Claim 1, characterised in that the concentration of polyamide-imide in the mixture is between 6 and 27 %.

5. Spinnable solutions according to Claim 1, characterised in that the amide solvent is N-methylpyrrolidone, dimethylacetamide, dimethylformamide or tetramethylurea.

6. Spinnable solutions according to Claim 1, characterised in that in the units A, B and C, R is an aromatic or aliphatic radical.

7. Spinnable solutions according to Claims 1 and 6, characterised in that R is a radical of formula

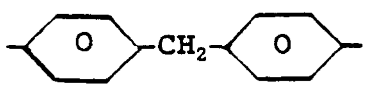

8. Spinnable solutions according to Claim 1, characterised in that the amide-imide units A contain a radical $R_1$ of formula

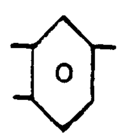

9. Spinnable solutions according to Claim 1, characterised in that the amide units B contain a radical $R_2$ of formula

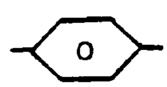

10. Spinnable solutions according to Claim 1, characterised in that the amide units B contain a group $SO_3M$ in which M is an alkali metal.

11. Process for obtaining solutions which can be spun and shaped directly, based on polyamides-imides according to Claim 1, characterised in that:

– the polycondensation is carried out between at least

a. a diisocyanate of formula -OCN-R-NCO- in which R is a divalent organic group free from any ether group.

b. an aromatic acid anhydride

c. an alkali or alkaline-earth metal 3,5-di carboxybenzenesulphonate

d. an aromatic diacid in such proportions that the molar ratio $\frac{a}{b+c+d}$ is substantially equal to 1 and that the acid anhydride is present in a proportion of 80 to 100 mol%, the benzenesulphonate in a proportion of 0 to 5 %, the aromatic acid in a proportion of 0 to 20 mol% relative to all the acidic reactants,

in anhydrous γ-butyrolactone free from butyl alcohol as polycondensation solvent, the polymer concentration before dilution being between 12 and 39 %, and then
the dilution is subsequently carried out at a temperature of between 120 and 165°C in an aprotic amide solvent of high boiling point so as to give a final concentration of polyamide-imide in the solvent mixture of between 5 and 30 % and so as to give a weight ratio reaction solvent/dilution solvent of between 40/60 and 80/20.

12. Process according to Claim 11, characterised in that the weight ratio reaction solvent/dilution solvent is between 50/50 and 80/20.

13. Process according to Claim 11, characterised in that the polymer concentration before dilution is between 15 and 36 %.

14. Process according to Claim 11, characterised in that the polymer concentration after dilution is between 6 and 27 %.

15. Process according to Claim 11, characterised in that the dilution is performed at a temperature of between 140 and 160°C.

16. Process according to Claim 11, characterised in that the diisocyanate employed is an aromatic or aliphatic diisocyanate.

17. Process according to Claims 11 and 16, characterised in that the diisocyanate employed is 4,4′-diphenylmethane diisocyanate.

18. Process according to Claim 11, characterised in that the aromatic acid anhydride is trimellitic anhydride.

19. Process according to Claim 11, characterised in that the aromatic acid is terephthalic acid.

20. Process according to Claim 11, characterised in that the benzenesulphonate is the sodium or potassium salt.

**Claims for the following Contracting State: ES**

1. Process for obtaining solutions which can be spun and shaped directly and which are based on polyamideimides containing:

a) - 5 to 30 % by weight of a polyamide-imide comprising

. amide-imide repeat units (A) of formula:

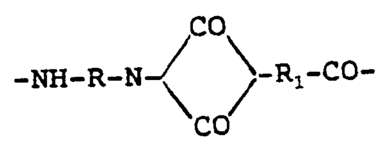

. amide-imide repeat units (B) of formula:

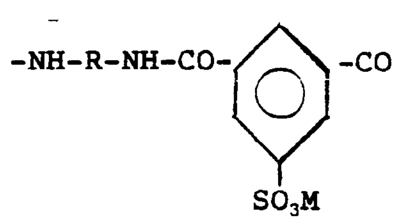

. amide repeat units (C) of formula:

$$-NH-R-NH-CO-R_2-CO-$$

in which

R = divalent organic radical free from any ether group,
$R_1$ = trivalent aromatic radical,
$R_2$ = divalent aromatic radical,
M = alkali or alkaline-earth metal,

the units A representing 80 to 100 % of all the units,
the units B representing 0 to 5 % of all the units,
the units C representing 0 to 20 % of all the units

b) - in a solvent mixture comprising:
. 40-80 % by weight of anhydrous γ-butyrolactone free from butyl alcohol,
. 20-60 % of an anhydrous aprotic amide solvent of high boiling point,
– by polycondensation carried out between at least
a) - a diisocyanate of formula -OCN-R-NCO- in which R is a divalent organic group free from any ether group,
b) - an aromatic acid anhydride,
c) - an alkali or alkaline-earth metal 3,5-di carboxybenzenesulphonate,
d) - an aromatic diacid in such proportions that the molar ratio $\frac{a}{b+c+d}$ is substantially equal to 1 and that the acid anhydride is present in a proportion of 80 to 100 mol%, the benzenesulphonate in a proportion of 0 to 5 %, the aromatic acid in a proportion of 0 to 20 mol% relative to all the acidic reactants, in anhydrous γ-butyrolactone free from butyl alcohol as polycondensation solvent, the polymer concentration before dilution being between 12 and 39 %, and then
– dilution subsequently carried out at a temperature of between 120 and 165°C in an aprotic amide solvent of high boiling point so as to give a final concentration of polyamide-imide in the solvent mixture of between 5 and 30 % and so as to give a weight ratio reaction solvent/dilution solvent of between 40/60 and 80/20.

2. Process according to Claim 1, characterised in that the reaction solvent/dilution solvent weight ratio is between 50/50 and 80/20.

3. Process according to Claim 1, characterised in that the polymer concentration before dilution is between 15 and 36 %.

4. Process according to Claim 1, characterised in that the amide solvent is N-methylpyrrolidone, dimethylacetamide, dimethylformamide or tetramethylurea.

5. Process according to Claim 1, characterised in that in the units A, B and C, R is an aromatic or aliphatic radical.

6. Process according to Claims 1 and 6, characterised in that R is a radical of formula

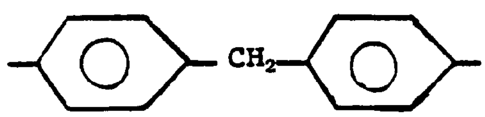

7. Process according to Claim 1, characterised in that the amide-imide units A contain a radical $R_1$ of formula

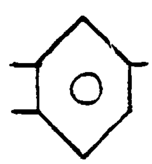

8. Process according to Claim 1, characterised in that the amide units B contain a radical $R_2$ of formula

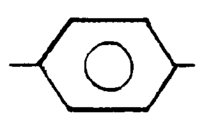

9. Process according to Claim 1, characterised in that the amide units B contain a group $SO_3M$ in which M is an alkali metal.

## Patentansprüche

### Patentansprüche für folgende Vertragsstaaten: AT, BE, CH, DE, FR, GB, IT, LI, LU, NL, SE

1. Direkt spinnbare und formbare, klare Lösungen, dadurch gekennzeichnet, daß sie enthalten:
(a) 5 bis 30 Gew.% eines Polyamid-Imids, umfassend:

. wiederkehrende Amid-Imid-Einheiten (A) der Formel

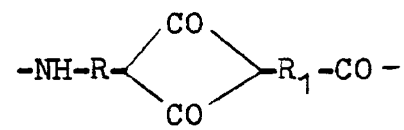

. wiederkehrende Amideinheiten (B) der Formel

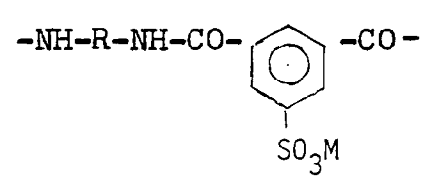

. wiederkehrende Amideinheiten (C) der Formel

$-NH-R-NH-CO-R_2-CO-$

worin:

R = ein zweiwertiger, organischer Rest ohne eine Ethergruppe,
$R_1$ = ein dreiwertiger, aromatischer Rest,
$R_2$ = ein zweiwertiger, aromatischer Rest,
M = ein Alkali- oder Erdalkalimetall,

die Einheiten A machen 80 bis 100% der Gesamtheit der Einheiten aus,
die Einheiten B machen 0 bis 5% der Gesamtheit der Einheiten aus,
die Einheiten C machen 0 bis 20% der Gesamtheit der Einheiten aus,

(b) in einem Lösungsmittelgemisch, umfassend

. 40 bis 80 Gew.% wasserfreies γ-Butyrolacton, das von Butylalkohol frei ist,
. 20 bis 60% eines wasserfreien, aprotischen Amid-Lösungsmittels mit einem erhöhten Siedepunkt.

2. Lösungen gemäß Anspruch 1, dadurch gekennzeichnet, daß sie eine quantitativ durch die Messung der Absorption bei der gleichen Wellenlänge von 500 nm einer 21%igen Polymerenlösung in 10facher Verdünnung mit Hilfe eines Shimadzu-Spektrophotome ters bestimmbare Färbung irischen 0,05 und 0,2 besitzen.

3. Lösungen gemäß Anspruch 1, dadurch gekennzeichnet, daß das Lösungsmittelgemisch 50 bis 80% γ-Butyrolacton und 20 bis 50% eines aprotischen Amid-Läsungsmittels mit einem erhöhten Siedepunkt umfaßt.

4. Spinnbare Lösungen gemäß Anspruch 1, dadurch gekennzeichnet, daß die Konzentration an Polyamid-Imid in dem Gemisch zwischen 6 und 27% beträgt.

5. Spinnbare Lösungen gemäß Anspruch 1, dadurch gekennzeichnet, daß das Amid-Lösungsmittel N-Methylpyrrolidon, Dimethylacetamid, Dimethylformamid oder Tetramethylharnstoff ist.

6. Spinnbare Lösungen gemäß Anspruch 1, dadurch gekennzeichnet, daß in den Einheiten A, B, C R für einen aromatischen oder aliphatischen Rest steht.

7. Spinnbare Lösungen gemäß den Ansprüchen 1 und 6, dadurch gekennzeichnet, daß R einen Rest der Formel

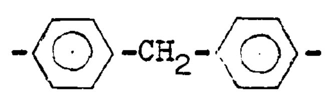

wiedergibt.

8. Spinnbare Lösungen gemäß Anspruch 1, dadurch gekennzeichnet, daß die Amid-Imid-Einheiten A einen Rest $R_1$ der Formel

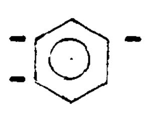

enthalten.

9. Spinnbare Lösungen gemäß Anspruch 1, dadurch gekennzeichnet, daß die Amid-Einheiten B einen Rest $R_2$ der Formel

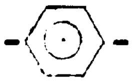

enthalten.

10. Spinnbare Lösungen gemäß Anspruch 1, dadurch gekennzeichnet, daß die Amid-Einheiten B eine Gruppe $SO_3M$ enthalten, worin M für ein Alkalimetall steht.

11. Verfahren zur Herstellung von direkt verspinnbaren und formbaren Lösungen auf Basis von Polyamid-Imiden gemäß Anspruch 1, dadurch gekennzeichnet, daß

– die Polykondensation durchgeführt wird zwischen zumindest

(a) einem Diisocyanat der Formel -OCN-R-NCO-, worin R für eine zweiwertige, organische Gruppe steht, die von einer Ethergruppe frei ist,

(b) einem aromatischen, sauren Anhydrid,

(c) einem Alkali- oder Erdalkali-3,5-dicarboxybenzolsulfonat,

(d) einer aromatischen Disäure, in derartigen Anteilen, daß das Molverhältnis $\frac{a}{b+c+d}$ im wesentlichen gleich 1 ist und daß das saure Anhydrid in einer Menge von 80 bis 100 Mol-% anwesend ist, das Benzolsulfonat in einer Menge von 0 bis 5%, die aromatische Säure in einer Menge von 0 bis 20 Mol-%, bezogen auf die Gesamtheit der sauren Reagentien, in dem wasserfreien γ-Butyrolacton, das von Butylalkohol frei ist, als Polykondensationslösungsmittel, wobei die Konzentration an Polymerem vor der Verdünnung zwischen 12 und 39% liegt, und dann

anschließende Verdünnung, durchgeführt bei einer Temperatur zwischen 120 und 165°C in einem aprotischen Amid-Lösungsmittel mit hohem Siedepunkt, derart, daß die Endkonzentration an Polyamid-Imid in dem Lösungsmittelgemisch zwischen 5 und 30% liegt und daß das Gewichtsverhältnis Reaktionslösungsmittel/Verdünnungslösungsmittel zwischen 40/60 und 80/20 beträgt.

12. Verfahren gemäß Anspruch 11, dadurch gekennzeichnet, daß das Gewichtsverhältnis Reaktionslösungsmittel/Verdünnungslösungsmittel zwischen 50/50 und 80/20 beträgt.

13. Verfahren gemäß Anspruch 11, dadurch gekennzeichnet, daß vor der Verdünnung die Konzentration an Polymerem zwischen 15 und 36% liegt.

14. Verfahren gemäß Anspruch 11, dadurch gekennzeichnet, daß nach der Verdünnung die Konzentration des Polymeren zwischen 6 und 27% beträgt.

15. Verfahren gemäß Anspruch 11, dadurch gekennzeichnet, daß die Verdünnung bei einer Temperatur zwischen 140 und 160°C durchgeführt wird.

16. Verfahren gemäß Anspruch 11, dadurch gekennzeichnet, daß das verwendete Diisocyanat ein aromatisches oder aliphatisches Diisocyanat ist.

17. Verfahren gemäß Anspruch 11 und 16, dadurch gekennzeichnet, daß das verwendete Diisocyanat 4,4'-Diphenylmethan-diisocyanat ist.

18. Verfahren gemäß Anspruch 11, dadurch gekennzeichnet, daß das saure, aromatische Anhydrid Trimellitanhydrid ist.

19. Verfahren gemäß Anspruch 11, dadurch gekennzeichnet, daß die aromatische Säure Terephthalsäure ist.

20. Verfahren gemäß Anspruch 11, dadurch gekennzeichnet, daß das Benzolsulfonat das Natrium- oder Kaliumsalz ist.

**Patentansprüche für folgenden Vertragsstaat: ES**

1. Verfahren zur Herstellung von direkt verspinnbaren und formbaren Lösungen auf Basis von Polyamid-Imiden, enthaltend:

(a) 5 bis 30 Gew.% eines Polyamid-Imids, anfassend:

. Wiederkehrende Amide-Imid-Einheiten (A) der Formel

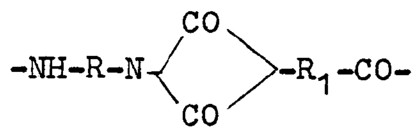

. Wiederkehrende Amideinheiten (B) der Formel

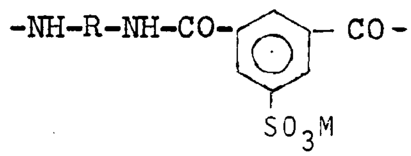

. Wiederkehrende Amideinheiten (C) der Formel

$$-NH-R-NH-CO-R_2-CO-$$

worin:

R = ein zweiwertiger, organischer Rest ohne eine Ethergruppe,
$R_1$ = ein dreiwertiger, aromatischer Rest,
$R_2$ = ein zweiwertiger, aromatischer Rest,
M = ein Alkali- oder Erdalkalimetall,

die Einheiten A machen 80 bis 100% der Gesamtheit der Einheiten aus,
die Einheiten B machen 0 bis 5% der Gesamtheit der Einheiten aus,
die Einheiten C machen 0 bis 20% der Gesamtheit der Einheiten aus,

(b) in einem Lösungsmittelgemisch, umfassend

. 40 bis 80 Gew.% wasserfreies γ-Butyrolacton, das von Butylalkohol frei ist,
. 20 bis 60% eines wasserfreien, aprotischen Amid-Lösungsmittels mit einem erhöhten Siedepunkt,

– durch Polycondensation, durchgeführt zwischen zumindest

(a) einem Diisocyanat der Formel -OCN-R-NCO-, worin R für eine zweiwertige, organische Gruppe steht, die von einer Ethergruppe frei ist,
(b) einem aromatischen, sauren Anhydrid,
(c) einem Alkali- oder Erdalkali-3,5-dicarboxybenzolsulfonat,
(d) einer aromatischen Disäure, in derartigen Anteilen, daß das Molverhältnis $\frac{a}{b+c+d}$ im wesentlichen gleich 1 ist und daß das saure Anhydrid in einer Menge von 80 bis 100 Mol-% anwesend ist, das Benzolsulfonat in einer Menge von 0 bis 5%, die aromatische Säure in einer Menge von 0 bis 20 Mol-%, bezogen auf die Gesamtheit der sauren Reagentien, in dem wasserfreien γ-Butyrolacton, das von Butylalkohol frei ist, als Polykondensationslösungsmittel, wobei die Konzentration an Polymerem vor der Verdünnung zwischen 12 und 39% liegt, und dann
anschließende Verdünnung, durchgeführt bei einer Temperatur zwischen 120 und 165°C in einem aprotischen Amid-Lösungsmittel mit hohem Siedepunkt, derart, daß die Endkonzentration an Polyamid-Imid in dem Lösungsmittelgemisch zwischen 5 und 30% liegt und daß das Gewichtsverhältnis Reaktionslösungsmittel(Verdünnungslösungsmittel zwischen 40/60 und 80/20 beträgt.

2. Verfahren gemäß Anspruch 1, dadurch gekennzeichnet, daß das Gewichtsverhältnis Reaktionslösungsmittel/Verdünnungslösungsmittel zwischen 50/50 und 80/20 beträgt.

3. Verfahren gemäß Anspruch 1, dadurch gekennzeichnet, daß vor der Verdünnung die Konzentration an Polymerem zwischen 15 und 36% beträgt.

4. Verfahren gemäß Anspruch 1, dadurch gekennzeichnet, daß das Amid-Lösungsmittel N-Methylpyrrolidon, Dimethylacetamid, Dimethylformamid oder Tetramethylharnstoff ist.

5. Verfahren gemäß Anspruch 1, dadurch gekennzeichnet, daß in den Einheiten A, B, C R für einen aromatischen oder aliphatischen Rest steht.

6. Verfahren gemäß den Ansprüchen 1 und 5 , dadurch gekennzeichnet, daß R einen Rest der Formel

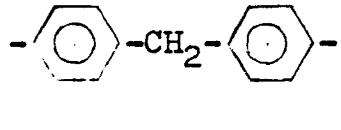

wiedergibt.

7. Verfahren gemäß Anspruch 1, dadurch gekennzeichnet, daß die Amid-Imid-Einheiten A einen Rest $R_1$ der Formel

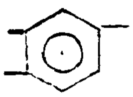

enthalten.

8. Verfahren gemäß Anspruch 1, dadurch gekennzeichnet, daß die Amid-Einheiten B einen Rest $R_2$ der Formel

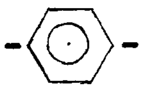

enthalten.

9. Verfahren gemäß Anspruch 1, dadurch gekennzeichnet, daß die Amid-Einheiten B eine Gruppe $SO_3M$ enthalten, worin M für ein Alkalimetall steht.